# EUROPÄISCHE PATENTANMELDUNG

(11) **EP 1 657 670 A1**
(43) Veröffentlichungstag der Anmeldung: **17.05.2006**
(21) Anmeldenummer: 05023816.1
(22) Anmeldetag: 02.11.2005
(51) Int. Cl.: G06Q 10/00

(54) **System und Verfahren zur Status- und Fortschriftskontrolle eines technischen Prozesses oder eines technischen Projektes**

(30) Priorität: 15.11.2004 DE 102004055107
(71) Anmelder: ABB PATENT GmbH, 68526 Ladenburg (DE)
(72) Erfinder: Alznauer, Richard, Dr. rer.nat., 67178 Ellerstadt (DE); Liefeld, Andreas, Dipl.-Ing., 44532 Lünen (DE); Gutermuth, Georg, Dipl.-Phas., 69115 Heidelberg (DE); Basenach, Stefan, Dipl.-Ing., 67434 Neustadt (DE); Beer, Peter, Dipl.-Ing. (BA), 68307 Mannheim (DE)
(74) Vertreter: Miller, Toivo

(57) **Zusammenfassung**

Die Erfindung bezieht sich auf ein System und Verfahren zur automatischen und systematischen Analyse und Kontrolle von Vorgängen eines technischen Prozesses (10) für die Status- und Fortschrittskontrolle des technischen Prozesses (10), basierend auf Daten (D), die den aktuellen Zustand des Prozesses (10) kennzeichnen, wobei in einem ersten Modul (20) Prüfroutinen (C) zur Beschreibung und Ausführung von Prüfkriterien für die Auswertung der Daten (D) definiert und abgelegt sind. Das erste Modul (20) wirkt mit einem zweiten Modul (30) zusammen, welches die im ersten Modul (20) abgelegten Prüfroutinen (C) zu hierarchisch strukturierten Checkpoints (CP) zusammenfasst. Die in den hierarchisch strukturierten Checkpoints (CP) abgelegten Prüfroutinen (C) überprüfen unter Zuordnung der vom Prozess (10) bereitgestellten Daten (D) und unter Berücksichtigung der Ergebnisse der von den untergeordneten Checkpoints (CP) ausgeführten Prüfroutinen (C), ein Zutreffen der in den Prüfroutinen (C) abgelegten Prüfkriterien, führen eine automatische Auswertung Prüfroutinen (C) durch und generieren Informationen über den jeweiligen Prozessstatus und/oder Prozessfortschritt.

## Beschreibung

Die Erfindung betrifft ein System und Verfahren zur automatischen und systematischen Analyse und Kontrolle von Vorgängen eines technischen Prozesses oder eines technischen Projektes, basierend auf Daten, welche den aktuellen Zustand des Projektes oder des Prozesses kennzeichnen, gemäß den Ansprüchen 1 und 10 und ist insbesondere geeignet zur Status- und Fortschrittskontrolle in der Anlagen- oder Leittechnikplanung verfahrenstechnischer Anlagen.

Für die Planung einer technischen Anlage, den Ablauf eines industriellen Prozesses oder eines technischen Projektes, nachfolgend als Prozess bezeichnet, ist es erforderlich, möglichst zu jedem Zeitpunkt einen Überblick über den aktuellen Status oder den Fortschritt des Prozesses zu erhalten, um beispielsweise sowohl komplexe Investitionsprojekte als auch komplexe technische Prozesse mit einem effektiven Einsatz von Ressourcen innerhalb eines vorgegebenen Zeit- und Kostenrahm ens abzuwickeln.

Um jederzeit aktuelle Informationen über den Status des Prozesses abrufen zu können, muss dazu ein klar strukturiertes und aussagekräftiges Berichtswesen, beispielsweise in Form von Berichten, vorliegen.

Insbesondere bei größeren Engineering-Projekten ist die Projektverfolgung mit einem erheblichen, administrativen Aufwand verbunden, der von in unterschiedliche Arbeitspakete unterteilten Arbeitsabläufen oder Arbeitsprozessen abhängt. Die Anzahl und der Umfang der Arbeitspakete stellen dabei eine wesentliche Einflussgröße auf die erfolgreiche Fortschrittskontrolle des Projektes dar.

Die gegenwärtig eingesetzten Verfahren zur Fortschrittsanalyse und -kontrolle der Prozesse arbeiten zeit-, budget- oder kostenorientiert. Zur Verwaltung und Visualisierung der Status- und Fortschrittsdaten wird üblicherweise eine eigene, von den Prozessdaten, Projektdaten, Anlagendaten oder Systemdaten unabhängige Datenbasis gepflegt, welche mit einer eigenständigen Software verwaltet wird. Dieses bedeutet somit einen zusätzlichen Zeitaufwand.

Für die Analyse und Kontrolle eines komplexen Prozesses werden dem in einzelne Arbeitspakete oder Unterprojekte gegliederten Prozess üblicherweise vorgegebene Ressourcen, wie beispielsweise Zeitkontingente, Kostenvorgaben und Bearbeiter zugeordnet und in vorhandene Pläne für eine nachfolgende Analyse abgelegt.

Die dabei eingesetzten Analyseverfahren benutzen Work-Breakdown-Strukturen oder Projekt-Struktur-Pläne, welche den Prozess in verschiedene Arbeitspakete mit geringerer Komplexität aufteilen, um den Prozess einfacher zu analysieren.

Während einer Projektlaufzeit werden beispielsweise durch einfache Stundenschreibung mittels einer stundengenauen Zuordnung der Arbeitsleistung zu einem geplanten Arbeitspaket, die vorhandenen Zeitkontingente verbraucht und lassen so eine kostenbasierte Bestimmung des aktuellen Projektstatus bzw. des Projektfortschritts zu.

In Ergänzung oder als Alternative zu Pflege von Zeitkontingenten können auch Dokumente den Nachweis über erbrachte Arbeitsschritte darstellen. Dazu werden die Dokumente vorab standardisiert, so dass die Übergabe von Informationen von einer Projektphase zur nächsten erfolgen kann und gleichzeitig der Projektfortschritt ergebnisbasiert für einen späteren Zeitpunkt nachvollziehbar dokumentiert wird.

Ein weiterer gegenwärtig eingesetzter Lösungsansatz zur Analyse und Kontrolle von Vorgängen technischer Projekte beruht auf einer strukturierten und regelmäßigen Informationssammlung beispielsweise mittels einer Befragung der am Projekt beteiligten Mitarbeiter und einer nachfolgenden computergestützten Auswertung der gesammelten Informationen, wobei dieser fortschrittsbasierte Ansatz jedoch mit einem erheblichen Zeitaufwand verbunden ist, insbesondere wenn Projekte in einem weltweiten Team abgewickelt werden.

Die beschriebenen Methoden und Vorgehensweisen zur Analyse und Kontrolle von Vorgängen technischer Projekte oder industrieller Prozesse erfordern eine kontinuierliche Pflege einer externen Datenbasis, um den Status oder den Fortschritt eines Prozesses zu beurteilen. Die Daten müssen dabei zeitaufwändig manuell eingepflegt oder von einer anderen Datenbasis, wie beispielsweise einem Stundenkonto, abgeleitet werden. Insbesondere die Pflege und Verwendung einer dazu notwendigen externen Software zur Datenhaltung verursacht durch notwendige Schufungen der Mitarbeiter und eine begleitende Datenpflege zusätzliche Kosten.

Die Analyse und Kontrolle des Status und des Fortschrittes des Prozesses erweisen sich jedoch insbesondere dann als problematisch, wenn die zur Verfügung stehenden Informationen oder Daten zum Teil Schätzungen unterliegen, die dazu führen, dass die durchgeführten Analysen große Unsicherheiten beinhalten und ungenau sind.

Des Weiteren ist es nicht möglich, zu einem beliebigen Zeitpunkt, ohne größere Antwortzeiten, welche die Zeit zwischen einer Statusanfrage und der entsprechenden Antwort beschreiben, eine spontane Abfrage des Prozessstatus durchzuführen. Insbesondere bei technischen Projekten, die mit einer großen Menge von Daten arbeiten, existiert durch einen vorgangsbasierten Ansatz, beispielsweise durch eine Stundenschreibung, bezogen auf Teilprozesse, eine verzerrte Sicht auf den Prozessstatus und/oder Prozessfortschritt. Eine datenbasierte Analyse oder Kontrolle der jeweiligen Vorgänge ist nicht möglich, da nur die Zeitkontingente betrachtet werden und eine Aussage über den tatsächlichen Arbeitsfortschritt fehlt. Es handelt sich dabei um abgeleitete Aussagen.

Ausgehend vom Stand der Technik liegt der Erfindung die Aufgabe zugrunde, ein System und ein Verfahren zur automatischen und systematischen Statusanalyse und Kontrolle von Vorgängen und/oder Abläufen eines technischen Prozesses oder Projektes anzugeben, wodurch vorgenannte Nachteile des Standes der Technik überwunden werden.

Diese Aufgabe wird erfindungsgemäß durch ein System der eingangs genannten Art mit den im Anspruch 1 angegebenen Merkmalen gelöst. Vorteilhafte Ausgestaltungen, Verbesserungen des erfindungsgemäßen Systems und ein Verfahren sind in weiteren Ansprüchen und in der Beschreibung angegeben.

Das erfindungsgemäße System zur automatischen und systematischen Analyse und Kontrolle von Vorgängen oder Abläufen eines technischen Prozesses oder eines technischen Projektes, nachfolgend Prozess genannt, basiert auf Daten, welche den aktuellen Zustand des Prozesses kennzeichnen, und ist insbesondere zur Status- und Fortschrittskontrolle in datengetriebenen Planungsprozessen geeignet, wie beispielsweise der Anlagen- und Leittechnikplanung.

Um den Status oder Fortschritt eines Prozesses zu beurteilen, werden die den Prozess kennzeichnenden Daten, nachfolgend auch als Prozess-, Projekt-, Anlagen- oder Systemdaten bezeichnet, mittels Prüfroutinen, sogenannten Checks, ausgewertet. Dazu sind die Prüfroutinen, die abstrakt beliebige Prüfkriterien für Daten unterschiedlicher Prozessabschnitte beschreiben, in einem im erfindungsgemäßen System vorhandenem ersten Modul definiert und abgelegt.

Die Prüfroutinen werden unabhängig von den Projekt-, Prozess-, Anlagen- oder Systemdaten definiert und beinhalten eine abstrakte Beschreibung der zu überprüfenden Daten. Beispielsweise sind die Prüfroutinen in der Lage, das Vorhandensein von Informationen von Objekten, beispielsweise Temperatur-Messungen, Schrittprogramme und Schaltschränke, von Dokumenten, beispielsweise Stromlaufpläne, Datenblätter, Funktionsbeschreibung, Abnahmeprotokolle und Zeichnungen oder von Attributen, beispielsweise Größe, Gewicht, Leistung und Bestellnummer zu überprüfen.

Die Daten umfassen in diesem Kontext ein oder mehrere Attribute eines Objekttyps, die Revision eines Objekttyps oder die Existenz von Verbindungen zu anderen Objekten. Die in den Prüfroutinen integrierten Kriterien führen eine Prüfung der Existenz von Daten, Datenobjekten und/oder Attributen der Datenobjekte durch. Beispielsweise wird dabei der Status von Attributen dahingehend überprüft, ob diese gesetzt oder nicht gesetzt sind. Auch werden Dokumenteigenschaften, wie die Größe, der Revisionsstand oder das Vorhandensein der Dokumente überprüft.

Das erste Modul wirkt mit einem zweiten Modul zusammen, welches die zuvor definierten Prüfroutinen, zu hierarchisch strukturierten Prüfstellen zusammenfasst, welche im folgenden auch als Checkpoints bezeichnet werden. Die Struktur der Checkpoints ist dabei wiederum aus einer beliebigen hierarchischen Tiefe geschachtelter Checkpoints aufgebaut.

In den hierarchisch strukturierten Checkpoints überprüfen die definierten Prüfkriterien die technische Vollständigkeit der vom Prozess bereitgestellten Daten, welche vorzugsweise zu Datenobjekten zusammengefasst sind, unter Berücksichtigung der Ergebnisse der von den jeweils untergeordneten Checkpoints ausgeführten Prüfroutinen und somit ein Zutreffen der in den Prüfroutinen abgelegten Prüfkriterien. Nach einer automatischen Auswertung der Prüfroutinen sind die überprüften Daten, welche den aktuellen Zustand oder den Fortschritt des Prozesses kennzeichnen, mittels einer Ausgabeeinheit darstellbar.

Für Statusabfragen bereiten die hierarchisch strukturierten Checkpoints die überprüften Daten der jeweils untergeordneten Checkpoints für die übergeordneten Checkpoints auf. Bei der Aufbereitung der Daten findet eine Verdichtung der Informationen statt (Aggregation) und der jeweils ausgewählte Checkpoint erstellt einen Bericht für die Ausgabeeinheit.

Somit führen die Checkpoints die Ergebnisse der definierten Prüfroutinen in vorteilhafter Weise zusammen. Durch eine festgelegte Zuordnung der Prüfroutinen zu den Daten und/oder Datenobjekten wird definiert, welche Prüfungen auf welche Daten angewendet werden. Bei der Auswertung eines Checkpoints werden die Prüfkriterien der Prüfroutinen auf alle zugeordneten Objekte angewendet und die Ergebnisse jeder Prüfroutine, als Informationen über den jeweiligen Prozessstatus und/oder Prozessfortschritt, im jeweiligen Checkpoint für eine weitere Verarbeitung und Auswertung zwischengespeichert. Prüfroutinen, die nicht auf den entsprechenden Objekttyp anwendbar sind, werden dabei übersprungen.

Nach der vollständigen Prüfung aller Daten oder Objekte werden Informationen über den jeweiligen Prozessstatus und/oder Prozessfortschritt generiert, verdichtet und vorzugsweise in Form eines zusammengefassten Berichtes oder Reportes mittels der Auswerteeinheit dargestellt.

Auch ist vorgesehen, die Informationen über den jeweiligen Prozessfortschritt zur weiteren Verarbeitung, beispielsweise für Managementberichte zur Verfügung zu stellen.

Die Darstellung der Informationen über den jeweiligen Prozessstatus und/oder Prozessfortschritt erfolgt beispielsweise durch eine farbige Kennzeichnung der Informationen über den jeweiligen Prozessstatus und/oder Prozessfortschritt in Verbindung mit den zugeordneten Objekten, insbesondere als Tabellen- oder Matrixdarstellung. Die Verwendung einer farblichen Kennzeichnung erleichtert in vorteilhafter Weise eine schnelle Identifikation fehlgeschlagener oder passierter Checks.

Da in technischen Projekten oder industriellen Prozessen eine Vielzahl von Datenobjekten zu erfassen und zu verarbeiten ist und eine einfache nicht strukturierte Liste von Checkpoints schnell unübersichtlich wäre, werden die Checkpoints bis zu einer beliebigen Tiefe hierarchisch strukturiert. Somit ist eine beliebig große Anzahl von Checkpoints übersichtlich darstellbar und die Ausführung eines Checks ist auf jeder beliebigen Stufe der Checkpoint-Hierarchie ausführbar. Da die hierarchisch strukturierten Checkpoints die Informationen über den jeweiligen Prozessstatus der jeweils untergeordneten Checkpoints verdichten und die Informationen über den jeweiligen Prozessstatus und/oder Prozessfortschritt in zusammengefasster Form an die jeweils übergeordneten Checkpoints weitergeben, ist eine Visualisierung der Informationen über den jeweiligen Prozessstatus und/oder Prozessfortschritt eines jeweils strukturierten Checkpoints, beispielsweise mittels der oben beschriebenen farbigen Kennzeichnung, in einer Baumhierarchie ausführbar.

Ein weiterer Vorteil der Erfindung beruht darauf, dass die hierarchische Strukturierung der Checkpoints keinen festgelegten Regeln unterliegt und die Struktur der Checkpoints in beliebig viele Hierarchiestufen unterteilbar ist. So sind die Prüfkriterien nach unterschiedlichen Gesichtspunkten parallel zu verwalten und Prüfroutinen zu beliebigen Zeitpunkten innerhalb des Prozessesablaufes ausführbar. Beispiele hierfür sind zeitliche, verfahrenstechnische oder örtliche Zusammenhänge. Ebenso ist eine Zuordnung der Datenobjekte zu beliebig vielen Checkpoints vorgesehen, so dass in unterschiedlichen Kontexten geprüft wird.

Durch die systematische Analyse und Auswertung der Prozess-, Anlagen- oder Systemdaten, sind somit in vorteilhafter Weise Aussagen über den momentanen Status, beispielsweise die technische Vollständigkeit der vorliegenden Daten und daraus ableitend über den jeweiligen Prozessstatus und/oder Prozessfortschritt, unabhängig von der Abrufzeit und den Eingaben oder Aussagen der Projektbearbeiter, möglich.

Die mit dem erfindungsgemäßen System durchgeführte Status- und Fortschrittskontrolle des laufenden Prozesses benötigt zusätzlich zu den vom Prozess zur Verfügung gestellten Projekt-, Anlagen- oder Prozessdaten keine weiteren Informationen zur Ermittlung des momentanen Status. Insbesondere ist es nicht erforderlich manuell zusätzliche Daten einzugegeben oder zu erzeugen.

Da die Analyse und Überprüfung der Daten allein anhand zur Verfügung stehender Daten durchgeführt wird, sind keine Schätzungen oder Vorhersagen über fehlende Informationen notwendig und Unsicherheiten bezüglich der Ermittlung des genauen Status oder Fortschritts des Prozesses werden vermieden.

Das Verfahren, mit dem die Aufgabe weiterhin gelöst wird, ist dem Anspruch 10 zu entnehmen. Dabei werden mittels eines ersten Moduls Prüfroutinen für die Auswertung der vom Prozess bereitgestellten Daten, welche vorzugsweise zu Datenobjekten zusammengefasst werden, definiert und abgelegt, wobei die Prüfroutinen beliebige Prüfkriterien für die Datenobjekte eines Prozesses oder Projekts beschreiben.

Mittels eines zweiten Moduls wird eine hierarchische Checkpoint-Struktur erzeugt und die im erstem Modul gespeicherten Prüfroutinen den Checkpoints zugeordnet. Dabei kann die Zuordnung einer Prüfroutine (Check) zu beliebig vielen Checkpoints erfolgen. In den hierarchisch strukturierten Checkpoints wird mittels der Prüfroutinen unter Verwendung der vom Prozess bereitgestellten Daten und unter Berücksichtigung der Ergebnisse der von den untergeordneten Checkpoints ausgeführten Prüfroutinen, die technische Vollständigkeit der Daten überprüft, eine automatische Auswertung der Prüfroutinen durchgeführt und Informationen über den jeweiligen Prozessstatus und/oder Prozessfortschritt mittels einer automatischen Iteration generiert.

Die Ausführung einer übergeordneten Prüfstelle berücksichtigt automatisch die Ausführung untergeordneten Checkpoints, wobei die Auswertungsinformationen untergeordneten Prüfroutinen und Checkpoints bis zum ausgeführten Checkpoint propagiert werden.

In vorteilhafter Weise ist mit dem erfindungsgemäßen Verfahren die Ausführung einer oder mehrerer Checkpoints sowohl manuell als auch automatisiert ausführbar.

Das der Erfindung zugrundeliegende Verfahren ist nicht vorgangsorientiert, da keine zeitlichen Abfolgen für den Abruf der Informationen über den aktuellen Status und Fortschritt des Prozesses vorgegeben oder vorausgesetzt werden.

Die Informationen über den jeweiligen Prozessstatus und/oder Prozessfortschritt werden einer Ausgabeeinheit übergeben, welche die Informationen in Form eines zusammengefassten Berichtes so aufbereitet und darstellt, dass jederzeit und ohne aufwändige Vorbereitungsarbeiten oder Terminierungen Aussagen über den Status und den Fortschritt des Prozesses abrufbar sind.

Ein weiterer Vorteil ergibt sich aus der hierarchischen Gliederung der Checkpoints, wodurch eine Informationsverdichtung nach oben und Navigationsmöglichkeiten zu Problemstellen des Prozesses möglich sind. Auch die Visualisierung beinhaltet eine lnformationsverdichtung.

In einer vorteilhaften Ausgestaltung der Erfindung ist auch vorgesehen, die von den Checkpoints ausgewerteten Informationen über den jeweiligen Prozessstatus und/oder Prozessfortschritt für eine Ressourcen- und/oder Engpassanalyse einzusetzen.

Eine Computerprogrammkomponente zur Ausführung auf einer entsprechend eingerichteten Datenverarbeitungseinrichtung, die die Merkmale des erfindungsgemäßem Verfahrens aufweist, führt zu einer bevorzugten Ausführungsform des erfindungsgemäßen Systems. Eine Computerprogrammkomponente, insbesondere ein auf einem Datenträger gespeichertes Computerprogramm, das die Merkmale des erfindungsgemäßen Verfahrens aufweist, wird daher ausdrücklich in den Offenbarungsgehalt der vorliegenden Anmeldung einbezogen.

Anhand des in den folgenden Figuren dargestellten Ausführungsbeispieles sollen die Erfindung sowie vorteilhafte Ausgestaltungen, Verbesserungen und weitere Vorteile der Erfindung näher erläutert und beschrieben werden.

Es zeigen:
- **Fig**. 1: eine Ausführungsform des erfindungsgemäßen Systems zur Analyse und Kontrolle von Vorgängen eines technischen Projektes,
- **Fig. 2.**: eine beispielhafte Prüfstelle und die Anwendung von Prüfroutinen auf Datenobjekte des technischen Projektes,
- **Fig. 3**: ein Beispiel einer strukturierten Prüfstelle und die Verdichtung der Informationen über den jeweiligen Projektstatus und/oder Projektfortschritt durch die strukturierte Prüfstelle, und
- **Fig. 4**: einen beispielhaften automatisch ablaufenden Verfahrensablauf, welcher eine Ausführungsform des erfindungsgemäßen Systems veranschaulicht.

**Fig**. 1 zeigt ein Ausführungsbeispiel des erfindungsgemäßen Systems zur automatischen und systematischen Analyse und Kontrolle von Vorgängen eines technischen Projektes 10 für die Status- und Fortschrittskontrolle des Projektes 10, basierend auf Daten D, die den aktuellen Zustand des Projektes 10 kennzeichnen und nachfolgend als Projektdaten bezeichnet werden.

Das erfindungsgemäße System umfasst ein erstes Modul 20, in welchem Prüfroutinen C zur Verarbeitung von Prüfkriterien für die Auswertung der Projektdaten D definiert und abgelegt sind.

Das erste Modul 20 wirkt mit einem zweiten Modul 30 zusammen, welches aus den im ersten Modul 20 abgelegten Prüfroutinen C unter Zuordnung der Projektdaten D aus dem Projekt 10 hierarchisch strukturierte Checkpoints CP bildet. Die hierarchisch strukturierten Checkpoints CP überprüfen mittels der definierten Prüfroutinen C unter Berücksichtigung der in den untergeordneten Checkpoints CP abgelegten Projektdaten D die technische Vollständigkeit der Projektdaten D und generieren Informationen über den jeweiligen Projektstatus und/oder Projektfortschritt des Projektes 10.

Nach einer Auswertung sind die überprüften Projektdaten D, als Informationen über den jeweiligen Projektstatus und/oder Projektfortschritt mittels einer Ausgabeeinheit 40 darstellbar. Dazu erstellen die jeweiligen Checkpoints CP einen Auswertungsbericht, welcher die Ergebnisse des jeweiligen Checkpoints CP in zusammengefasster Form, insbesondere als Tabellen- oder Matrixdarstellung, darstellt.

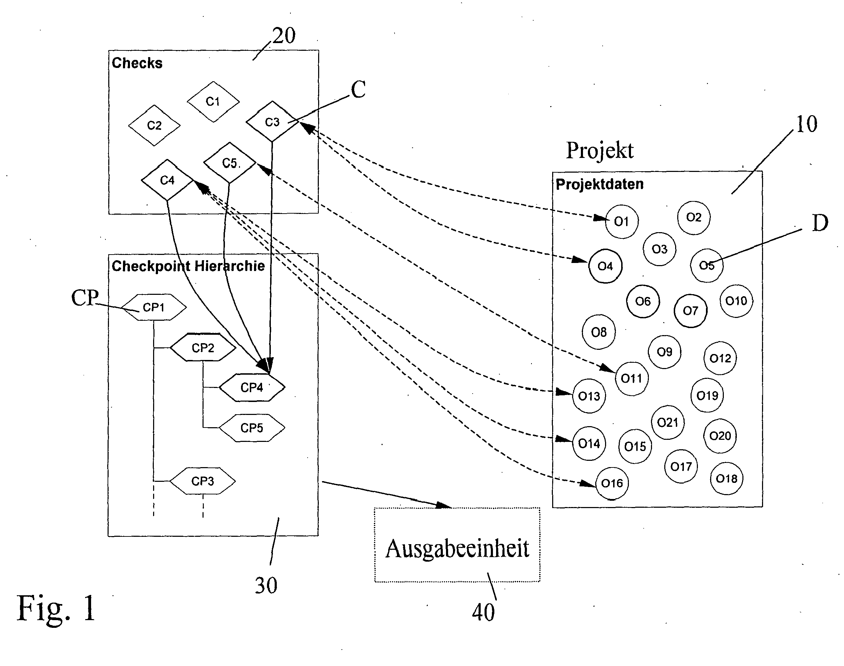

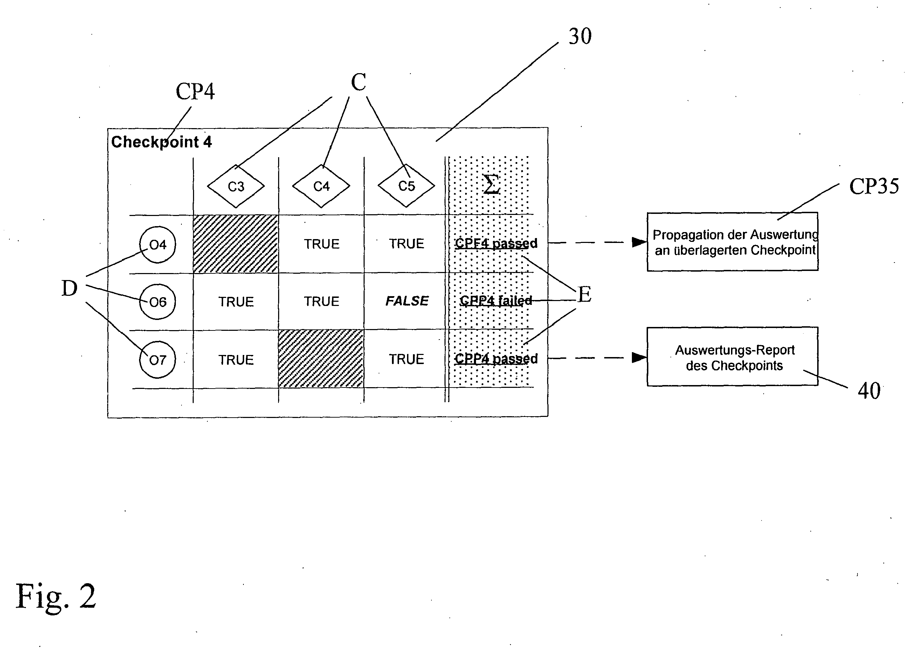

**Fig.** 2 zeigt die Anwendung der Prüfroutinen C auf Datenobjekte 04, 06, 07 des technischen Projektes 10, wobei ein im zweiten Modul 30 integrierter Checkpoint CP4 mit den Prüfroutinen C3, C4, C5 und den Projektdaten D sowie die Anwendung der Checkpoints C3, C4, C5 auf zugeordnete Projektdaten D, die zu Datenobjekten 04, 05, 06 zusammengefasst sind, dargestellt sind.

Der Checkpoint CP4 führt die definierten Prüfroutinen C3, C4, C5 und die Datenobjekte 04, 05, 06 des Projektes 10 zusammen. Durch die Zuordnung der Prüfroutinen C3, C4, C5 zu Datenobjekten 04, 05, 06 des Projektes 10 wird definiert, welche Prüfkriterien auf welche Daten D angewendet werden. Bei der Auswertung des Checkpoints CP4 werden die Prüfkriterien der Prüfroutinen C3, C4, C5 auf alle zugeordneten Objekte 04, 05, 06 angewendet und die ermittelten Informationen E über den jeweiligen Projektstatus und/oder Projektfortschritt der Prüfroutinen C3, C4, C5 durch die Prüfstelle CP4 zwischengespeichert, für eine übergeordnete Prüfstelle CP35 ausgewertet und/oder als Auswertungsbericht der Auswerteeinheit 40 übermittelt.

**Fig**. 2 zeigt beispielhaft das zweite Modul 30, welches als Tabelle ausgeführt ist und die Ergebnisse der Prüfroutinen TRUE, FALSE und die ausgewerteten Informationen E in zusammengefasster und übersichtlicher Form dargestellt. Die Darstellung der ausgewerteten Informationen E erfolgt durch eine grafische Kennzeichnung. Die Verwendung der grafischen Kennzeichnung erleichtert eine schnelle Identifikation eines fehlgeschlagenen Checks CPF4 oder der passierten Checks CPP4.

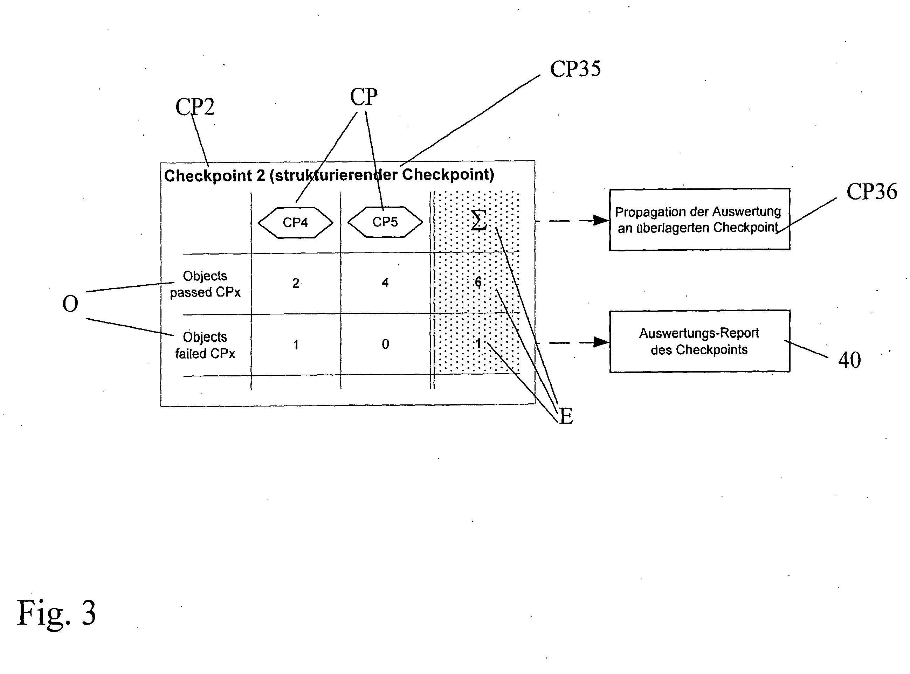

Die Verarbeitung und Verdichtung der Informationen des jeweiligen Projektstatus und/oder Projektfortschritts mittels einer in der hierarchischen Struktur übergeordneten Prüfstelle CP35 sind in **Fig.** 3 gezeigt.

Bei der Auswertung des überordneten Checkpoints CP35 werden die Informationen der untergeordneten Checkpoints CP4, CP5 auf alle zugeordneten Objekte O der untergeordneten Checkpoints CPx angewendet und die ermittelten Informationen E jedes untergeordneten Checkpoints CP4, CP5 durch die übergeordnete Prüfstelle CP35; wie schon in **Fig.** 2 beschrieben, zwischengespeichert und für die nächstfolgende übergeordnete Prüfstelle CP36 ausgewertet, zusammengefasst und/oder als Auswertungsbericht der Auswerteeinheit 40 übermittelt.

Die strukturierte Prüfstelle CP35 verdichtet die ermittelten Informationen E über den jeweiligen Projektstatus und/oder Projektfortschritt der untergeordneten Checkpoints CP4, CP5 und gibt die Informationen E in zusammengefasster Form an den nächsten übergeordneten Checkpoint CP36 weiter. Die Visualisierung der Ergebnisse des strukturierten Checkpoints CP35 erfolgt durch die oben beschriebene grafische Kennzeichnung mittels der Ausgabeeinheit 40.

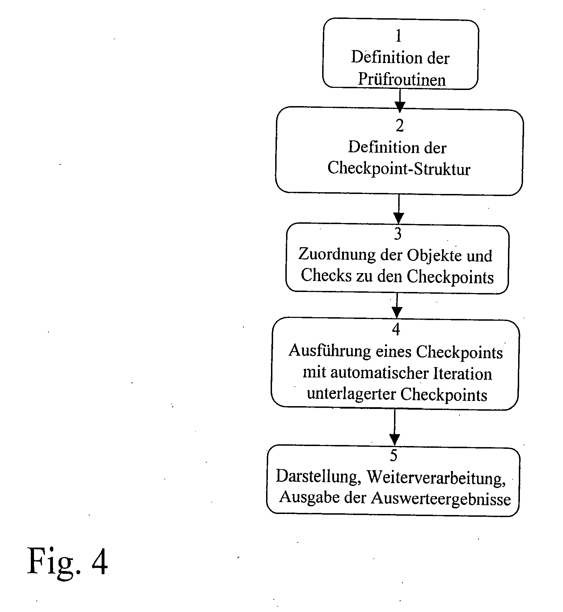

**Fig.** 4 zeigt einen beispielhaften automatischen Verfahrensablauf, welcher eine Ausführungsform des erfindungsgemäßen Systems zur automatischen und systematischen Analyse und Kontrolle von Daten D eines Prozesses 10 veranschaulicht.

In einem ersten vorbereitenden Schritt 1 werden mittels des ersten Moduls 20 Prüfroutinen C für die Auswertung der vom Prozess 10 bereitgestellten Daten D, welche vorzugsweise zu Datenobjekten zusammengefasst werden, definiert und abgelegt, wobei die Prüfroutinen C beliebige Prüfkriterien für die Datenobjekte eines industriellen Prozesses oder eines technischen Projekts beschreiben.

In einem zweiten Schritt 2 wird mittels des ersten Moduls 20 aus den Prüfroutinen C eine Checkpoint-Struktur zur Beschreibung von Prüfkriterien für die Auswertung der vom Prozess 10 bereitgestellten Daten D definiert und abgelegt.

Die zu Datenobjekten zusammengefassten Daten D und zugehörigen Prüfroutinen C werden in einem dritten Schritt 3 in den Checkpoints CP des zweiten Moduls 30 einander zugeordnet und in einem vierten Schritt 4 führen die Checkpoints CP unter Berücksichtigung der Informationen aus den untergeordneten Checkpoints CP eine automatische Iteration (Auswertung) durch.

In einem letzten Schritt 5 werden die ausgewerteten Informationen über den aktuellen Status und/oder Fortschritt mittels einer Ausgabeeinheit 40 dargestellt, weiterverarbeitet oder ausgegeben.

## Patentansprüche

1. System zur automatischen und systematischen Analyse und Kontrolle von Vorgängen oder Abläufen eines technischen Prozesses (10) für die Status- und Fortschrittskontrolle des technischen Prozesses (10), basierend auf Daten (D), die den aktuellen Zustand des Prozesses (10) kennzeichnen, wobei
- in einem ersten Modul (20) Prüfroutinen (C) zur Beschreibung und Ausführung von Prüfkriterien für die Auswertung der Daten (D) definiert und abgelegt sind,
- das erste Modul (20) mit einem zweiten Modul (30) zusammenwirkt, welches die im ersten Modul (20) abgelegten Prüfroutinen (C) zu hierarchisch strukturierten Checkpoints (CP) zusammenfasst,
- die in den hierarchisch strukturierten Checkpoints (CP) abgelegten Prüfroutinen (C) unter Zuordnung der vom Prozess (10) bereitgestellten Daten (D) und unter Berücksichtigung der Ergebnisse der von den untergeordneten Checkpoints (CP) ausgeführten Prüfroutinen (C) ein Zutreffen der in den Prüfroutinen (C) abgelegten Prüfkriterien überprüfen, eine automatische Auswertung der Prüfroutinen (C) durchführen und Informationen über den jeweiligen Prozessstatus und/oder Prozessfortschritt generieren.

2. System nach Anspruch 1, **dadurch gekennzeichnet, dass** eine Ausgabeeinheit (40) vorgesehen ist, welche die mittels der Checkpoints (CP) ermittelten Informationen über den jeweiligen Prozessstatus und/oder Prozessfortschritt zusammenfasst, darstellt und/oder zur weiteren Verarbeitung bereitstellt.

3. System nach Anspruch 1 oder 2, **dadurch gekennzeichnet, dass** die Checkpoints (CP) einen Auswertungsbericht für die Ausgabeeinheit (40) erstellen, welcher die Informationen über den jeweiligen Prozessstatus und/oder Prozessfortschritt des jeweiligen Checkpoints (CP) in zusammengefasster Form, insbesondere als Tabellen- oder Matrixdarstellung, darstellt.

4. System einem der vorherigen Ansprüche, **dadurch gekennzeichnet, dass** die Struktur der Checkpoints (CP) in beliebig viele Hierarchiestufen unterteilbar ist.

5. System einem der vorherigen Ansprüche, **dadurch gekennzeichnet, dass** die Informationen über den jeweiligen Prozessstatus und/oder Prozessfortschritt einer oder mehrerer Checkpoints (CP) automatisch abrufbar und/oder aufbereitbar sind.

6. System nach einem der vorherigen Ansprüche, **dadurch gekennzeichnet, dass** die Prüfkriterien der Prüfroutinen (C) die Vollständigkeit, den Status und/oder die Eigenschaften von Objekten, Dokumenten und/oder Attributen überprüfen.

7. System nach einem der vorherigen Ansprüche, **dadurch gekennzeichnet, dass** die Prüfroutinen (C) unabhängig von den Daten (D) des Prozesses (10) definiert sind.

8. System nach einem der vorherigen Ansprüche, **dadurch gekennzeichnet, dass** die Prüfroutinen (C) ein oder mehrere Attribute eines Objekttyps, die Revision eines Objekttyps und/oder die Existenz von Verbindungen zu anderen Objekten überprüfen.

9. System nach einem der vorherigen Ansprüche, **dadurch gekennzeichnet, dass** der Prozess ein industrieller Prozess oder ein technisches Projekt ist.

10. Verfahren zur automatischen und systematischen Analyse und Kontrolle von Vorgängen oder Abläufen eines technischen Prozesses (10) für die Status- und Fortschrittskontrolle des technischen Prozesses (10), basierend auf Daten (D), die den aktuellen Zustand des Prozesses (10) kennzeichnen, wobei
- in einem ersten Modul (20) Prüfroutinen (C) zur Beschreibung von Prüfkriterien für die Auswertung der Daten (D) definiert und abgelegt werden,
- in einem zweiten Modul (30) die im ersten Modul (20) abgelegten Prüfroutinen (C) zu hierarchisch strukturierten Checkpoints (CP) zusammengefasst werden, und
- mittels der in den hierarchisch strukturierten Checkpoints (CP) abgelegten Prüfroutinen (C) unter Zuordnung der vom Prozess (10) bereitgestellten Daten (D) und unter Berücksichtigung der Ergebnisse der von den untergeordneten Checkpoints (CP) ausgeführten Prüfroutinen (C), ein Zutreffen der in den Prüfroutinen (C) abgelegten Prüfkriterien überprüft wird, eine automatische Auswertung der Prüfroutinen (C) durchgeführt wird und Informationen über den jeweiligen Prozessstatus und/oder Prozessfortschritt generiert werden.

11. Verfahren nach Anspruch 10, **dadurch gekennzeichnet, dass** die mittels der Checkpoints (CP) ermittelten Informationen über den jeweiligen Prozessstatus und/oder Prozessfortschritt zusammengefasst, darstellt und/oder zur weiteren Verarbeitung bereitstellt werden.

12. Verfahren nach einem der Ansprüche 10 oder 11, **dadurch gekennzeichnet, dass** mittels der Checkpoints (CP) ein Auswertungsbericht erstellt wird, welcher die Informationen über den jeweiligen Prozessstatus und/oder Prozessfortschritt der jeweiligen Prüfstelle (CP) in zusammengefasster Form, insbesondere als Tabellen- oder Matrixdarstellung, darstellt.

13. Verfahren nach einem der Ansprüche 10 bis 12, **dadurch gekennzeichnet, dass** die Struktur der Checkpoints (CP) in beliebig viele Hierarchiestufen unterteilt wird.

14. Verfahren nach einem der Ansprüche 10 bis 13, **dadurch gekennzeichnet, dass** mittels einer oder mehrerer Checkpoints (CP) die Informationen über den jeweiligen Prozessstatus und/oder Prozessfortschritt automatisch abgerufen und/oder aufbereitet werden.

15. Verfahren nach einem der Ansprüche 10 bis 14, **dadurch gekennzeichnet, dass** mittels der in den Prüfroutinen (C) abgelegten Prüfkriterien die Vollständigkeit, der Status und/oder die Eigenschaften von Objekten, Dokumenten, Attributen und/oder die Existenz von Verbindungen zu anderen Objekten überprüft werden.

16. Verfahren nach einem der Ansprüche 10 bis 15, **dadurch gekennzeichnet, dass** die Prüfroutinen (C) unabhängig von den Daten (D) des Prozesses (10) definiert werden.

17. System und Verfahren nach einem der vorherigen Ansprüche, **dadurch gekennzeichnet, dass** die Informationsverdichtung und Auswertung der Checkpoints (CP) softwaregesteuert und automatisch ausführbar sind.
